# EUROPÄISCHE PATENTANMELDUNG

(11) **EP 2 660 642 A1**
(43) Veröffentlichungstag der Anmeldung: **06.11.2013**
(21) Anmeldenummer: 13002260.1
(22) Anmeldetag: 29.04.2013
(51) Int. Cl.: G02B 21/34, G01N 21/64

(54) **Mikroskopierhilfe**

(30) Priorität: 04.05.2012 AT 1942012
(71) Anmelder: KDG Mediatech AG, 6652 Elbigenalp (AT)
(72) Erfinder: Wörle, Alexander, 6653 Bach (AT)
(74) Vertreter: Gangl, Markus

(57) **Zusammenfassung**

Mikroskopierhilfe für Untersuchungen von Zellen, mit einem plattenförmigen Körper (3) aus einem transparenten Material, wobei an einer Oberfläche (13, 14) des plattenförmigen Körpers (3) wenigstens eine gitterförmige Struktur (8) angeordnet ist, wobei der plattenförmige Körper (3) einen Mittelpunkt (7) aufweist und der wenigstens einen gitterförmigen Struktur (8) wenigstens eine mikroskopische Markierung (10) zur Kenntlichmachung der Position der wenigstens einen gitterförmigen Struktur (8) relativ zum Mittelpunkt (7) des plattenförmigen Körpers (3) in einer Detailvergrößerung zugeordnet ist.

## Beschreibung

Die Erfindung betrifft eine Mikroskopierhilfe für Untersuchungen von Zellen, mit einem plattenförmigen Körper aus einem transparenten Material, wobei an einer Oberfläche des plattenförmigen Körpers wenigstens eine gitterförmige Struktur angeordnet ist.

Zu den im Zusammenhang mit der vorliegenden Erfindung relevanten Untersuchungen von Zellen gehören z.B. Zählungen von Zellen oder Zellevents, gezielte Zellmanipulationen, Zellmigrationsstudien oder die Identifikation von Zellen bei mikroskopischen oder spektroskopischen Anwendungen.

Aus dem Stand der Technik ist es bekannt, zur Verbesserung des Nutzerkomforts einzelne Bereiche der gitterförmigen Struktur der Mikroskopierhilfe zu kennzeichnen, um ein Objekt auch bei hohen Vergrößerungen wiederzufinden. In diesem Kontext sei auf die DE 3902348 A1 verwiesen. Nachteilig dabei ist, dass derartige Kennzeichnungen dann nicht mehr von Nutzen sind, wenn z.B. Zellbewegungen auf dem plattenförmigen Körper der Mikroskopierhilfe studiert werden sollen. Hier wäre es wünschenswert, wenn bei hohen Vergrößerungen ein Bezug zur absoluten Position eines Objektes auf dem plattenförmigen Körper der Mikroskopierhilfe herstellbar wäre, um z.B. die Richtung einer Zellbewegung nachvollziehen zu können.

Die Aufgabe der vorliegenden Erfindung besteht darin, diesen Nachteil zu beheben und eine im Vergleich zum Stand der Technik verbesserte Mikroskopierhilfe für Untersuchungen von Zellen anzugeben, die sich insbesondere durch einen erhöhten Nutzerkomfort auszeichnen.

Diese Aufgabe wird erfindungsgemäß durch die Merkmale des Anspruchs 1 gelöst.

Eine Grundidee der Erfindung besteht also darin, dass der plattenförmige Körper einen Mittelpunkt aufweist und dass der wenigstens einen gitterförmigen Struktur wenigstens eine mikroskopische Markierung zur Kenntlichmachung der Position der wenigstens einen gitterförmigen Struktur relativ zum Mittelpunkt des plattenförmigen Körpers in einer Detailvergrößerung zugeordnet ist.

Das Merkmal, dass der plattenförmige Körper einen Mittelpunkt aufweist, bedeutet nicht automatisch, dass er - in der Draufsicht betrachtet - kreisförmig ausgebildet ist, obwohl dies gemäß einer bevorzugten Ausführungsform vorgesehen ist. Der plattenförmige Körper kann in der Draufsicht alternativ z.B. auch die Form eines Rechtecks oder eines regelmäßigen Vierecks aufweisen. Der Mittelpunkt derartiger geometrischer Figuren entspricht in diesen Fällen dem Mittelpunkt des Umkreises. Mittels der wenigstens einen mikroskopischen Markierung wird ein Nutzer im Vergleich zum Stand der Technik in vorteilhafter Weise dazu in die Lage versetzt, in der Detailvergrößerung unmittelbar einen Bezug zum Mittelpunkt des plattenförmigen Körpers herzustellen ohne hierzu, wie dies beim Stand der Technik der Fall ist, in signifikantem Umfang die Vergrößerung zu reduzieren.

In einer vorteilhaften Ausführungsform der Erfindung umfasst die wenigstens eine mikroskopische Markierung, die vorzugsweise eine Größe im Mikrometer-Bereich aufweist, wenigsten ein alphanumerisches Zeichen. Auf diese Weist ist es z.B. möglich, Polarkoordinaten anzugeben. Weitere Möglichkeiten, mit Hilfe alphanumerischer Zeichen die Position der wenigstens einen gitterförmigen Struktur relativ zum Mittelpunkt kenntlich zu machen, werden anhand der Figuren beschrieben.

Wenn der plattenförmige Körper vier Quadranten aufweist, so kann es - ergänzend zur Kenntlichmachung der Position relativ zum Mittelpunkt - auch vorgesehen sein, dass die wenigstens eine mikroskopische Markierung derart ausgebildet ist, dass ein Nutzer einen Bezug zu einem der Quadranten herstellen kann.

Ein weiteres optionales Merkmal besteht darin, dass die wenigstens eine gitterförmige Struktur des plattenförmigen Körpers in der Form eines Hoch-Tief-Schachbrettes aus vorzugsweise quaderförmigen oder pyramidenstumpfförmigen Erhebungen und dazwischen liegenden ebenen Flächen ausgebildet ist. Mittels dieser Ausführungsform kann in vorteilhafter Weise der Kontrast der gitterförmigen Struktur erhöht werden.

Weiterhin hat es sich als günstig herausgestellt, dass der plattenförmige Körper im Wesentlichen aus einem transparenten Kunststoff, vorzugsweise aus Polystyrol, Polycarbonat, einem Cyclo-Olefin-Copolymer, wie z.B. Topas-COC, oder Polymethylpenten (Abkürzung: PMP), besteht. Daneben können auch andere transparente medizinische Kunststoffe verwendet werden. Die Herstellung des plattenförmigen Körpers aus Kunststoff bietet gleich mehrere Vorzüge z.B. im Vergleich zu der Verwendung von Glas: Es ist möglich, kleinere Strukturen zu schaffen. So können ohne weiteres bei einer gitterförmigen Struktur, die aus rechteckigen und/oder quadratischen Feldern besteht, die Seiten dieser Felder sehr klein gemacht werden, z.B. mit einer Länge von ≤ 250 µm. Des Weiteren ist die Verwendung von Kunststoff sehr viel preisgünstiger.

In diesem Zusammenhang sei erwähnt, dass eine aus Kunststoff gefertigte Mikroskopierhilfe wie folgt hergestellt werden kann: Zunächst wird eine Maske programmiert, die dann mittels eines Elektronenstrahllitographie-Verfahrens auf einen Wafer übertragen wird. Von diesem erstellt man dann einen Nikelabzug, der in weiterer Folge für das eigentliche Spritzgussverfahren zum Einsatz kommt. Ein derartiges Verfahren zur Herstellung der Mikroskopierhilfe sei vom Schutzumfang der vorliegenden Erfindung nicht ausgeschlossen.

Eine weitere vorteilhafte Ausführungsform der Erfindung ist dadurch gekennzeichnet, dass die Mikroskopierhilfe neben der wenigstens einen mikroskopischen Markierung auch noch wenigstens eine makroskopische Markierung zur Orientierung der Mikroskopierhilfe relativ zu einem äußeren Bezugssystem aufweist. Bei diesem äußeren Bezugssystem handelt es sich z.B. um einen Träger, der zumindest bereichsweise aus einem transparenten Material besteht, und der wenigsten eine Ausnehmung zur Aufnahme der wenigsten einen Mikroskopierhilfe aufweist. Eine derartige makroskopische Markierung, die vorzugsweise eine Größe im Millimeter-Bereich aufweist, kann z.B. wenigstens ein alphanumerisches Zeichen und/oder wenigstens eine geometrische Figur umfassen. Die Orientierung der Mikroskopierhilfe mittels einer solchen makroskopischen Markierung kann dadurch erleichtert werden, dass die makroskopische Markierung asymmetrisch ausgebildet ist, sodass ein Nutzer z.B. sofort erkennt ob die "richtige" Seite der Mikroskopierhilfe ihm zu- oder abgewandt ist.

Und schließlich hat es sich als vorteilhaft herausgestellt, wenn wenigstens eine Oberfläche des plattenförmigen Körpers zumindest bereichsweise angeätzt ist. Hierdurch kann die Zellhaftung verbessert werden.

Schutz wird auch begehrt für eine Anordnung, die aus wenigstens einer erfindungsgemäßen Mikroskopierhilfe und einem Träger der vorbeschriebenen Art besteht. Ein solcher Träger wird häufig auch als Multiwell-Platte bezeichnet. Entsprechend werden die darin angeordneten Mikroskopierhilfen auch als Multiwell-Einsätze bezeichnet. Andere dem Fachmann geläufige Namen sind cell-culture insert, coverslip oder Probenträger.

Alternativ kann es auch vorgesehen sein, dass die Strukturen und Markierungen, die auf den Mikroskopierhilfen angeordnet sind, direkt in die Ausnehmungen des Trägers eingebracht werden, so dass man gänzlich auf die Mikroskopierhilfen verzichten kann.

Weitere vorteilhafte Ausführungsformen der Erfindung sind in den abhängigen Ansprüchen definiert und werden - zusammen mit zusätzlichen Einzelheiten und Vorteilen der Erfindung - im Rahmen der folgenden Figurenbeschreibung anhand der Figuren näher erläutert. Dabei zeigt:
- Fig. 1a und 1b: eine Anordnung aus einem Träger und einer Mikroskopierhilfe, wobei diese Anordnung in der Fig. 1a in der Draufsicht und in der Fig. 1b in einer Querschnittsansicht schematisch dargestellt ist,
- Fig. 2a und 2b: eine Mikroskopierhilfe, ebenfalls in einer schematisch dargestellten Draufsicht und Querschnittsansicht,
- Fig. 3a bis 3d: vier in einer Draufsicht schematisch dargestellte Mikroskopierhilfen mit jeweils einer unterschiedlichen makroskopischen Markierung,
- Fig. 4a und 4b: zwei gitterförmige Strukturen in der Form eines Hoch-Tief-Schachbrettes in schematisch dargestellten perspektivischen Ansichten, und
- Fig. 5 und 6: zwei unterschiedliche Ausführungsformen der Mikroskopierhilfe in einer schematisch dargestellten Draufsicht.

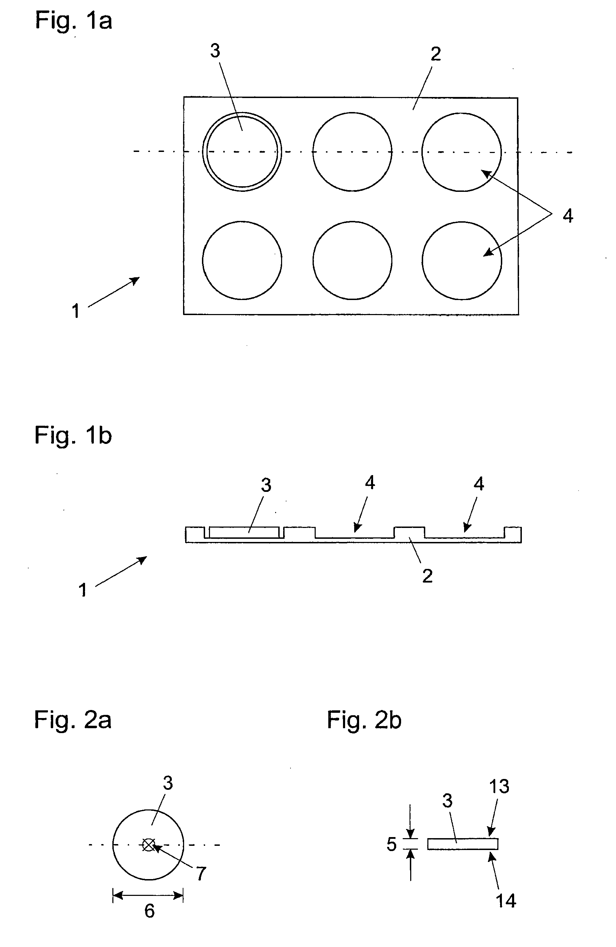

Fig. 1 a zeigt in einer schematisch dargestellten Draufsicht eine Anordnung 1 aus einem Träger 2, der aus einem transparenten Material besteht und der sechs zylindrische Ausnehmungen 4 aufweist. Wie bei der Ausnehmung links oben zu sehen ist, dienen diese Ausnehmungen 4 der Aufnahme von jeweils einer Mikroskopierhilfe 3. Dieser Sachverhalt wird auch anhand der Fig. 1 b deutlich, die eine schematisch dargestellte Querschnittsansicht der Anordnung 1 entlang der in der Fig. 1 a eingezeichneten strichpunktierten Linie zeigt. Die Mikroskopierhilfe 3 besteht ebenfalls aus einem transparenten Material, genau gesagt aus einem transparenten Kunststoff. Unter transparenten Materialien seien im Kontext mit der vorliegenden Erfindung Materialen verstanden, die für elektromagnetische Wellen, deren Wellenlängen im sichtbaren Bereich liegen, durchlässig sind.

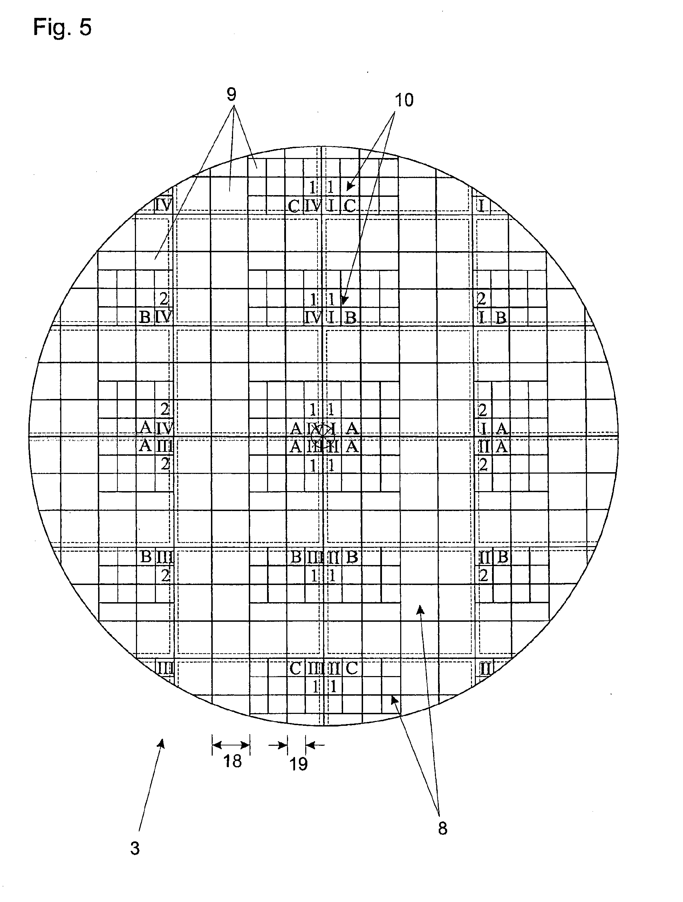

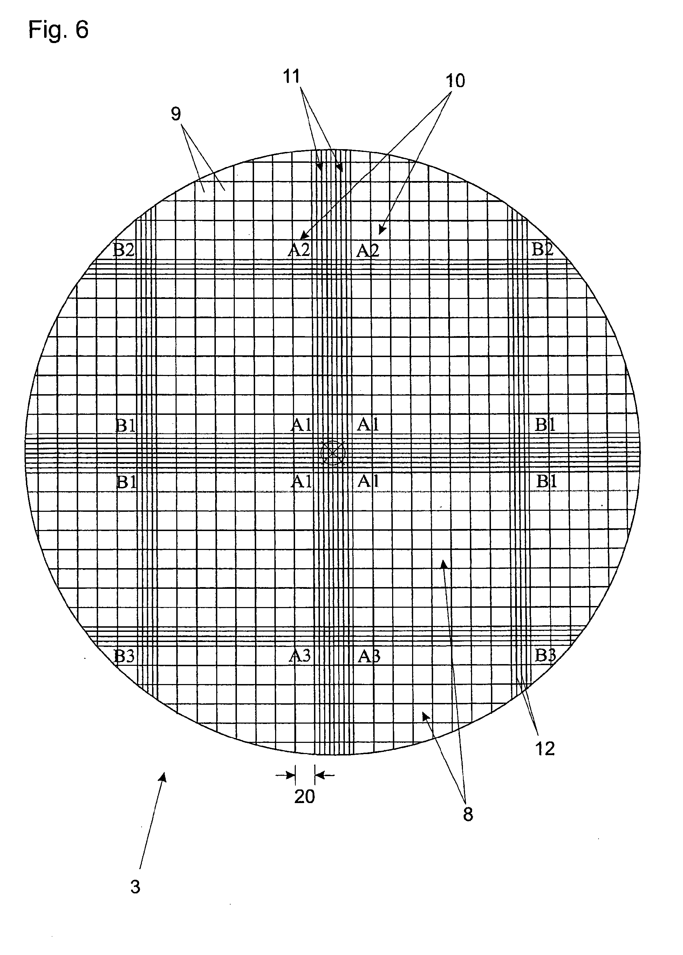

Die Fig. 2a und 2b zeigen, schematisch dargestellt in einer Draufsicht bzw. in einer Querschnittsansicht, eine Mikroskopierhilfe in einer bevorzugten Ausführungsform. In dieser Ausführungsform besteht die Mikroskopierhilfe im Wesentlichen aus einem plattenförmigen Körper 3 mit einer Deckfläche 13 und einer Bodenfläche 14, wobei die Deckfläche 13 und die Bodenfläche 14 parallel zu einander ausgerichtet sind. Der Abstand 5 zwischen diesen beiden Flächen 13 und 14 beträgt typischerweise 0,2mm bis 0,7mm. Wie anhand der Draufsicht erkennbar ist, sind die Deckfläche 13 und die Bodenfläche 14 kreisförmig ausgebildet. Der Mittelpunkt 7 dieser Flächen 13 und 14 ist in der Fig. 2a (und in den Fig. 5 und 6) durch ein sich in einem Kreis befindliches Kreuz gekennzeichnet. Insgesamt gesehen weist die Mikroskopierhilfe 3 in dieser Ausführungsform die Form eines geraden Zylinders mit der Höhe 5 auf. Der Durchmesser 6 der beiden Flächen 13 und 14 des Zylinders liegt zwischen 5mm und 2 mm und beträgt vorzugsweise 5mm, 10mm, 13mm, 15mm, 20mm oder 25mm.

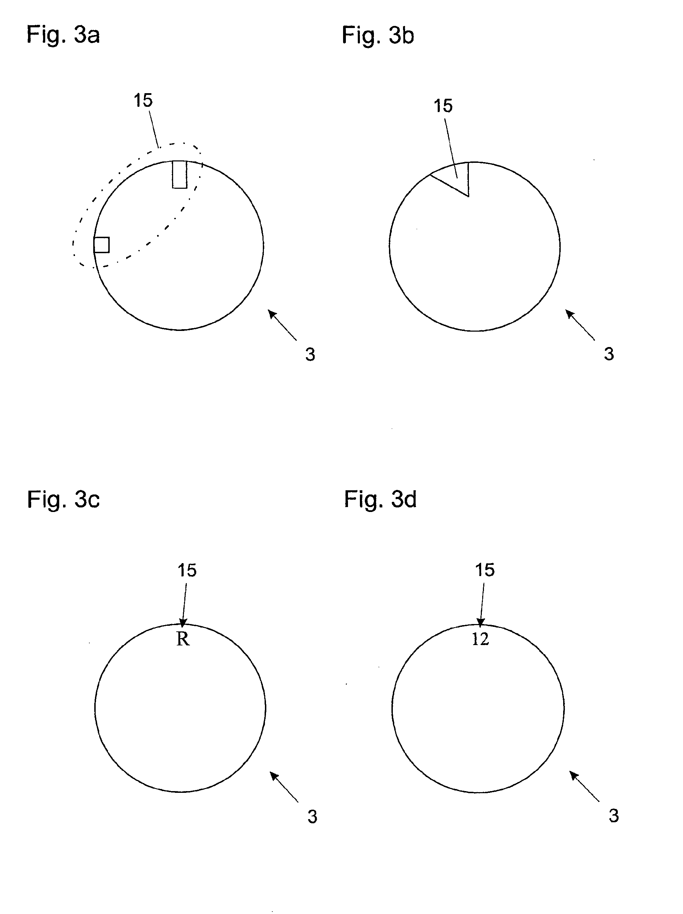

Zur Orientierung bzw. räumlichen Ausrichtung der Mikroskopierhilfe 3 relativ zu dem Träger 2 ist es vorteilhaft, wenn die Mikroskopierhilfe 3 eine makroskopische Markierung aufweist. Die Größe dieser makroskopischen Markierung beträgt 1 mm bis 2mm. In den Fig. 3a bis 3d sind vier verschiedene Ausführungsformen einer solchen makroskopischen Markierung 15 gezeigt: Es kann sich dabei, wie im Falle der Fig. 3a und 3b, um eine oder mehrere geometrische Figuren handeln. Die makroskopische Markeierung kann ergänzend oder alternativ, wie im Falle der Fig. 3c und 3d, ein oder mehrere alphanumerische Zeichen umfassen. Ein all diesen Ausführungsformen innewohnendes Grundmerkmal der makroskopischen Markierung 15 besteht darin, dass sie asymmetrisch ausgebildet ist, sodass ein Nutzer sofort erkennen kann, ob die Deckfläche der Mikroskopierhilfe 3 nach oben zeigt, also ihm zugewandt ist, oder nicht. Ein weiterer großer Vorteil dieser makroskopischen Markierungen 15 besteht darin, dass ein Nutzer durch sie in die Lage versetzt wird, die Mikroskopierhilfen immer in der gleichen Weise relativ zu dem Träger 2 (vergleiche Fig. 1a) auszurichten und das ohne Zuhilfenahme eines Mikroskops, nur mit dem bloßen Auge. Bezüglich der Fig. 3a und 3b sei noch angemerkt, dass die gezeigten geometrischen Figuren leer oder mit einer Farbe gefüllt sein können.

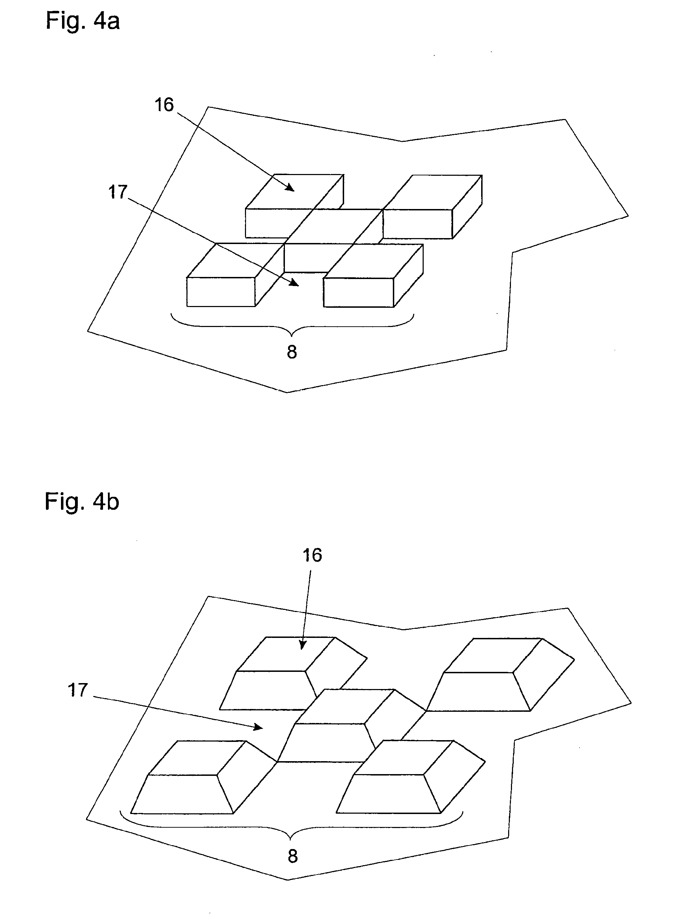

In den Fig. 4a und 4b ist eine Möglichkeit dargestellt, den Kontrast der an einer Oberfläche des plattenförmigen Körpers angeordneten gitterförmigen Struktur 8, die in den Fig. 1 a bis 3d der Übersichtlichkeit halber weggelassen wurde, zu erhöhen. Und zwar ist das dadurch möglich, dass die gitterförmige Struktur 8 in der Form eines Hoch-Tief-Schachbrettes aus Erhebungen 16 und dazwischen liegenden ebenen Flächen 17 ausgebildet ist, wobei es sich bei den in der Fig. 4a zu sehenden Erhebungen 16 um quaderförmige Erhebungen und bei den in der Fig. 4b zu sehenden Erhebungen 16 um pyramidenstumpfförmige Erhebungen handelt. Eine derartige Kontrasterhöhung vereinfacht die Untersuchung der Zellen die sich auf den einzelnen Feldern, sprich auf den Erhebungen 16oder den dazwischen liegenden Flächen 17, befinden.

In den Fig. 5 und 6 sind zwei bevorzugte Ausführungsformen der an der Oberfläche des plattenförmigen Körpers 3 angeordneten gitterförmigen Strukturen 8 in einer im Vergleich zu den vorausgehenden Zeichnungen vergrößerten Ansicht schematisch dargestellt. Allgemein ist festzuhalten, dass die gitterförmigen Strukturen 8 aus rechteckigen und/oder quadratischen Feldern 9 zusammengesetzt sind.

Im Falle des in der Fig. 5 dargestellten Ausführungsbeispiels betragen die Längen 18 und 19 der Seiten dieser Felder 9 250µm bzw. 125µm. Es ergeben sich hier drei unterschiedlich große Felder 9, deren Zusammensetzung sich immer wieder wiederholt, was anhand der gestrichelten Linien angedeutet sei. Jeder dieser Bereich 8 des plattenförmigen Körpers hat ein 4:3 Format und besteht aus acht großen Quadraten, zwölf kleinen Quadraten und zwei rechteckigen Feldern 9. Jedem dieser Bereiche 8 ist eine mikroskopische Markierung 10 zur Kenntlichmachung der Position relativ zum Mittelpunkt des plattenförmigen Körpers 3 zugeordnet. Sie weist eine Größe von ca. 100 - 200µm auf, ist aus jeweils drei alphanumerischen Zeichen zusammengesetzt und befindet sich jeweils in einer Ecke der Bereiche bzw. der gitterförmigen Strukturen 8. Die römische Ziffer I - IV gibt die Zugehörigkeit zu einem der vier Quadranten der Kreisfläche an, die arabische Ziffer 1, 2, 3, usw. markiert die Nummer der Spalte, in welcher sich eine gitterförmige Struktur 8 befindet, wobei diese Nummer mit dem Abstand von dem Mittelpunkt zunimmt. Der Buchstabe A, B, C, usw. gibt die Zeile an, in welcher sich eine gitterförmige Struktur 8 befindet, wobei ein im Alphabet weiter hinten gereihter Buchstabe bedeutet, dass sich die Zeile bzw. damit die gitterförmige Struktur 8 weiter vom Mittelpunkt entfernt befindet als eine gitterförmige Struktur mit dem Buchstaben A. Durch die mikroskopischen Markierungen 10 wird der Nutzer also dazu in die Lage versetzt, direkt in der Detailvergrößerung zu erkennen, wo sich eine gitterförmige Struktur 8 in Bezug auf das Zentrum der Mikroskopierhilfe 3 befindet. Des Weiteren weiß er, in welchem der vier Quadranten sich die Gitterstruktur 8 befindet.

Fig. 6 zeigt eine weitere bevorzugte Ausführungsform der Mikroskopierhilfe 3. In diesem Fall sind die gitterförmigen Strukturen 8 deutlich durch Trennfelder 11 bzw. durch diese Felder 11 verlaufenden Trennlinien 12 voneinander getrennt. Jeder der Bereiche 8 umfasst 8 x 8 quadratische Felder 9 mit einer Kantenlänge 20 von 125µm, sodass jeder der Bereiche 8 eine Grundfläche von 1mm² aufweist. Zur Kenntlichmachung der Position der gitterförmigen Strukturen 8 in Bezug auf den Mittelpunkt der Mikroskopierhilfe 3, ist jeder der gitterförmigen Strukturen 8 eine mikroskopische Markierung 10 zugeordnet, die in diesem Fall aus einer Kombination aus einem Buchstaben und einer arabischen Ziffer besteht. Die Logik der Kombination des Buchstabens und der Ziffer ist die gleiche wie bei dem in der Fig. 5 gezeigten Ausführungsbeispiel. Im Prinzip ist darüber hinaus auch hier ein Nutzer dazu in der Lage, einen Bezug zu einem der vier Quadranten der Kreisfläche herzustellen und zwar über die Tatsache in welcher Ecke der Bereiche 8 die mikroskopische Markierung 10 angeordnet ist. Sie ist nämlich jeweils immer in derjenigen Ecke angeordnet, deren Abstand zum Mittelpunkt der Mikroskopierhilfe 3 am kleinsten ist.

## Patentansprüche

1. Mikroskopierhilfe für Untersuchungen von Zellen, mit einem plattenförmigen Körper (3) aus einem transparenten Material, wobei an einer Oberfläche (13, 14) des plattenförmigen Körpers (3) wenigstens eine gitterförmige Struktur (8) angeordnet ist, **dadurch gekennzeichnet, dass**
- der plattenförmige Körper (3) einen Mittelpunkt (7) aufweist und
- der wenigstens einen gitterförmigen Struktur (8) wenigstens eine mikroskopische Markierung (10) zur Kenntlichmachung der Position der wenigstens einen gitterförmigen Struktur (8) relativ zum Mittelpunkt (7) des plattenförmigen Körpers (3) in einer Detailvergrößerung zugeordnet ist.

2. Mikroskopierhilfe nach Anspruch 1, **dadurch gekennzeichnet, dass** die wenigstens eine mikroskopische Markierung (10) wenigstens ein alphanumerisches Zeichen umfasst.

3. Mikroskopierhilfe nach Anspruch 1 oder 2, **dadurch gekennzeichnet, dass** die wenigstens eine mikroskopische Markierung (10) eine Größe im Mikrometer-Bereich aufweist.

4. Mikroskopierhilfe nach einem der Ansprüche 1 bis 3, **dadurch gekennzeichnet, dass** der plattenförmige Körper (3) vier Quadranten aufweist, und mittels der wenigstens einen mikroskopischen Markierung (10) ein Bezug zu einem der Quadranten herstellbar ist.

5. Mikroskopierhilfe nach einem der Ansprüche 1 bis 4, **dadurch gekennzeichnet, dass** die wenigstens eine gitterförmige Struktur (8) des plattenförmigen Körpers (3) rechteckige und/oder quadratische Felder (9) umfasst, wobei die rechteckigen und/oder quadratischen Felder (9) insbesondere Seiten (18, 19, 20) mit einer Länge von ≤ 250µm aufweisen.

6. Mikroskopierhilfe nach einem der Ansprüche 1 bis 5, wobei an der Oberfläche (13, 14) des plattenförmigen Körpers (3) mehr als eine gitterförmige Struktur (8) angeordnet ist, **dadurch gekennzeichnet, dass** die gitterförmigen Strukturen (8) durch Trennfelder (11) und/oder durch Trennlinien (12) voneinander getrennt sind.

7. Mikroskopierhilfe nach einem der Ansprüche 1 bis 6, **dadurch gekennzeichnet, dass** die wenigstens eine gitterförmige Struktur (8) des plattenförmigen Körpers (3) in der Form eines Hoch-Tief-Schachbretts aus vorzugsweise quaderförmigen oder pyramidenstumpfförmigen Erhebungen (16) und dazwischen liegenden ebenen Flächen (17) ausgebildet ist.

8. Mikroskopierhilfe nach einem der Ansprüche 1 bis 7, **dadurch gekennzeichnet, dass** der plattenförmige Köper (3) eine Deckfläche (13) und eine Bodenfläche (14) aufweist, wobei die Deckfläche (13) und die Bodenfläche (14) im Wesentlichen parallel zueinander ausgerichtet sind.

9. Mikroskopierhilfe nach Anspruch 8, **dadurch gekennzeichnet, dass**
- die Deckfläche (13) und die Bodenfläche (14) einen Abstand (5) von 0,2mm bis 0,7mm aufweisen, und/oder
- die Deckfläche (13) und die Bodenfläche (14) im Wesentlichen kreisförmig ausgebildet sind, wobei die Deckfläche (13) und die Bodenfläche (14) insbesondere einen Durchmesser (6) von 5mm bis 25mm, vorzugsweise einen Durchmesser (6) von 5mm, 10mm, 13mm, 15mm, 20mm oder 25mm, aufweisen.

10. Mikroskopierhilfe nach einem der Ansprüche 1 bis 9, **dadurch gekennzeichnet, dass** der plattenförmige Köper (3) im Wesentlichen aus einem transparenten Kunststoff, vorzugsweise aus Polystyrol, Polycarbonat, einem Cyclo-Olefin-Copolymer oder Polymethylpenten, besteht.

11. Mikroskopierhilfe nach einem der Ansprüche 1 bis 10, **dadurch gekennzeichnet, dass** wenigstens eine Oberfläche (13, 14) des plattenförmigen Körpers (3) zumindest bereichsweise angeätzt ist.

12. Mikroskopierhilfe nach einem der Ansprüche 1 bis 11, **dadurch gekennzeichnet, dass** wenigstens eine Oberfläche (13, 14) des plattenförmigen Körpers (3) zumindest bereichsweise sterilisiert ist.

13. Mikroskopierhilfe nach einem der Ansprüche 1 bis 12, **dadurch gekennzeichnet, dass** die Mikroskopierhilfe wenigstens eine makroskopische Markierung (15) zur Orientierung der Mikroskopierhilfe relativ zu einem äußeren Bezugssystem (2) aufweist.

14. Mikroskopierhilfe nach Anspruch 13, **dadurch gekennzeichnet, dass**
- die wenigstens eine makroskopische Markierung (15) wenigstens ein alphanumerisches Zeichen und/oder wenigstens eine geometrische Figur umfasst, und/oder
- die wenigstens eine makroskopische Markierung (15) asymmetrisch ausgebildet ist, und/oder
- die wenigstens eine makroskopische Markierung (15) eine Größe im Millimeter-Bereich aufweist.

15. Anordnung (1) aus wenigstens einer Mikroskopierhilfe nach einem der Ansprüche 1 bis 14 und einem Träger (2), wobei der Träger (2) zumindest bereichsweise aus einem transparenten Material besteht, und wenigstens eine Ausnehmung (4) zur Aufnahme der wenigstens einen Mikroskopierhilfe aufweist.
